# EUROPEAN PATENT APPLICATION

(11) **EP 4 406 825 A1**
(43) Date of publication of application: **31.07.2024**
(21) Application number: 23153251.6
(22) Date of filing: 25.01.2023
(51) Int. Cl.: B63B 75/00

(54) **FLOATING MARINE PLATFORM AND THE ASSEMBLY THEREOF**

(71) Applicant: Ocergy, Inc., Oakland, CA 94607 (US)
(72) Inventor: AUBAULT, Alexia Marie, OAKLAND, 94607 (US); CERMELLI, Christian André, OAKLAND, 94607 (US); LANOUX, Fabien, OAKLAND, 94607 (US); URRUCHI DEL BARRIO, Alvaro, OAKLAND, 94607 (US)
(74) Representative: Geurts, Franciscus Antonius

(57) **Abstract**

The invention relates to a set comprising a floating marine platform and an assembly tool for the assembly of the floating marine platform,
wherein the floating marine platform comprises a central column, multiple peripheral columns circumferentially around the central column, radially extending outriggers that connect the peripheral columns with the central column, and tendons spanning between each adjacent pair of peripheral columns, wherein the peripheral columns comprise a tendon receptacle with a tool dock, a shim chamber and a tendon passage, and wherein the assembly tool comprises a tool connector, a tendon tensioner and a tensioning shim installer, wherein the tendon tensioner comprises a tendon puller.

## Description

### BACKGROUND

The invention relates to a floating marine platform that comprises a central column, multiple peripheral columns circumferentially around the central column, radially extending outriggers that connect the peripheral columns with the central column, and tendons spanning between each adjacent pair of peripheral columns. A floating marine platform of this type may be used to form the base of a floating wind turbine for the generation of electricity offshore.

### SUMMARY OF THE INVENTION

The components of the floating marine platform may be fabricated on different locations and transported to an integration site of a marshalling harbor. The tendons are installed and pre-tensioned at a final stage, wherein they have to absorb the differences between their nominal length and their actual required length between the peripheral columns. The installation and the pre-tensioning of the tendons is therefore a complex operation, while a rapid pace on a large scale is required to meet the growing demand for floating wind turbines. The central column, the peripheral columns, the outriggers and the tendons are therefore fabricated under tight tolerances to achieve a reasonable assembly time of the floating marine platform.

It is an object of the present invention to provide a floating marine platform and a method for the assembly thereof that allows a rapid pace of the assembly on a large scale, preferably without driving the fabrication tolerances of the components to unreasonably small discrepancies.

According to a first aspect, the invention provides a set comprising a floating marine platform and an assembly tool for the assembly of the floating marine platform,
wherein the floating marine platform comprises a central column, multiple peripheral columns circumferentially around the central column, radially extending outriggers that connect the peripheral columns with the central column, and tendons spanning between each adjacent pair of peripheral columns, wherein the peripheral columns comprise a circumferential wall and a tendon receptacle on the circumferential wall for receiving a tendon end, and wherein the tendon comprises an elongated tube and a tensioning head at an end of the elongated tube,
wherein the tendon receptacle comprises a receptacle frame and a tool dock on the receptacle frame, wherein the receptacle frame bounds a shim chamber and a tendon passage and comprises a tensioning surface that faces the shim chamber,
wherein the tensioning head is enclosed in the shim chamber and the elongated tube extends through the tendon passage,
wherein the floating marine platform comprises a tensioning shim in the shim chamber between the tensioning head and the tensioning surface,
wherein the assembly tool comprises a tool frame, a tool connector on the tool frame for engagement of the tool dock, a tendon tensioner and a tensioning shim installer, wherein the tendon tensioner comprises a tendon puller for engaging the tendon, that is moveable with respect to the tool frame in the elongated direction of the elongated tube over a pre-tensioning stroke, and wherein the tensioning shim installer comprises a tensioning shim holder for the tensioning shim, wherein the tensioning shim holder is moveable with respect to the tool frame transverse to the elongated direction of the elongated tube over an installation stroke.

The set according to the invention has the assembly tool that comprises the tool connector that engages the tool dock of the tendon receptacle, the tendon tensioner for pre-tensioning the tendon, and the tensioning shim installer for subsequently inserting the tensioning shim between the tensioning head and the tensioning surface to retain the pre-tension. The position of the tool dock, the tendon tensioner and the tension shim installer are well defined by the common tool frame, and therefore their positions with respect to the tendon receptacle and the tendon end are well defined. This allows a rapid pace of the assembly of such floating marine platforms on a large scale. In addition there may be the ability to apply the assembly tool or an integration site or marshalling harbor, or even when the floating marine platform is already floating in the water. The assembly tool may be remotely controlled which is safe and in particular useful when used under water.

In an embodiment the tendon comprises a tool engagement head on the elongated tube spaced apart from the tensioning head, wherein the tendon puller comprises an abutment body for abutment of the tool engagement head. The engagement of the tendon for the pre-tensioning thereof takes place spaced apart from the tensioning head and therefore without interfering with the tensioning head and the tensioning surface between which the tensioning shim needs to be installed. The part of the tendon between the tool engagement head and the tensioning head may remain free of bending moments while a high pre-tensioning load is applied.

In an embodiment the tool dock and the tool frame comprise a tool slot and an insert wall for insertion into the tool slot in an insert direction transverse to the elongated direction of the elongated tube. As in practise the peripheral columns stand upright and the tendons extend in a horizontal direction, the cooperating tool slot and insert wall allows the assembly tool to be lowered onto the tendon receptacle to bring the tool connector in engagement with the tool dock.

In an embodiment the tendon tensioner comprises a first actuator between the tendon puller and the tool frame for moving the tendon puller over the pre-tensioning stroke.

In an embodiment the tensioning shim installer comprises a second actuator between the tensioning shim holder and the tool frame for moving the tensioning shim holder over the installation stroke.

Preferably the set comprises a remote controller for the first actuator and/or second actuator, whereby the assembly tool can be controlled from a safe distance, and in particular without human divers when the assembly tool is applied under water.

In an embodiment the receptacle frame comprises two opposite tensioning walls spaced apart from each other that bound the tendon passage and that form the tensioning surface.

In an embodiment the shim chamber and the tendon passage are open at one side to receive the tendon in a receive direction of the tendon receptacle.

In an embodiment thereof the receive direction of the tendon receptacle is directed downwards to receive the end of the tendon from above, whereby the tendon end can be hoisted into the tendon receptacle.

In an embodiment the tensioning shim comprises a tensioning shim plate with an elongated tensioning shim slot that opens at an edge of the tensioning shim plate to define a receive direction into the tensioning shim, wherein the elongated tube extends through the tensioning shim slot.

In an embodiment thereof the tensioning shim slot extends through the centre of the tensioning shim plate.

In an embodiment the floating marine platform comprises a tolerance shim in the shim chamber between the tensioning head and the tensioning surface and in series with the tensioning shim in the elongated direction of the elongated tube. The tolerance shim can be used to minimize any play between the tensioning head and the tendon receptacle on both ends of the tendon when it has not been pre-tensioned yet. As from this situation, the pre-tensioning can be performed by the assembly tool with high accuracy. The tolerance shim allows a fabrication of the components of the floating marine platform under reasonable tolerances that are typically applied in shipyards or offshore fabrication yards while a pre-tension in the tendons is obtained as prescribed.

In an embodiment thereof the tolerance shim comprises a tolerance shim plate with an elongated tolerance shim slot that opens at an edge of the tolerance shim plate to define a receive direction into the tolerance shim, wherein the elongated tube extends through the tolerance shim slot.

In an embodiment thereof the tolerance shim slot extends through the centre of the tolerance shim plate.

In an embodiment the tensioning shim comprises a tensioning shim plate with an elongated tensioning shim slot that opens at an edge of the tensioning shim plate to define a receive direction into the tensioning shim, wherein the elongated tube extends through the tensioning shim slot, and wherein the floating marine platform comprises a tolerance shim in the shim chamber between the tensioning head and the tensioning surface and in series with the tensioning shim in the elongated direction of the elongated tube, wherein the tolerance shim comprises a tolerance shim plate with an elongated tolerance shim slot that opens at an edge of the tolerance shim plate to define a receive direction into the tolerance shim, wherein the elongated tube extends through the tolerance shim slot, and the tensioning shim and the tolerance shim together fully surround the elongated tube behind the tensioning head. The cooperating tensioning shim and tolerance shim keep the tendon end confined in the tendon receptacle. The tensioning shim and the tolerance shim may have the same shape and thickness to reduce the amount of different parts that has to be available on site.

In an embodiment thereof the receive direction into the tensioning shim is opposite to and aligned with the receive direction into the tolerance shim.

In an embodiment the tensioning shim and the tolerance shim are mounted to the receptacle frame, whereby the tensioning head itself remains able to absorb any bending of the elongated tube with respect to the tendon receptacle.

According to a second aspect, the invention provides a method for the assembly of a floating marine platform,
wherein the floating marine platform comprises a central column, multiple peripheral columns circumferentially around the central column, radially extending outriggers that connect the peripheral columns with the central column, and tendons spanning between each adjacent pair of peripheral columns, wherein the peripheral columns comprise a circumferential wall and a tendon receptacle on the circumferential wall for receiving a tendon end, and wherein the tendon comprises an elongated tube and a tensioning head at an end of the elongated tube,
wherein the tendon receptacle comprises a receptacle frame that bounds a shim chamber and a tendon passage and comprises a tensioning surface that faces the shim chamber,
wherein the tensioning head is enclosed in the shim chamber and the elongated tube extends through the tendon passage,
wherein the floating marine platform comprises a tensioning shim and a tolerance shim in the shim chamber in series between the tensioning head and the tensioning surface,
wherein the tensioning shim comprises a tensioning shim plate with an elongated tensioning shim slot that opens at an edge of the tensioning shim plate to define a receive direction into the tensioning shim, and wherein the tolerance shim comprises a tolerance shim plate with an elongated tolerance shim slot that opens at one edge of the tolerance shim plate to define a receive direction into the tolerance shim,
wherein the elongated tube extends through the tendon passage, the tolerance shim slot and the tensioning slot, and wherein the shim chamber and the tendon passage are open at one side to receive the tendon in a receive direction of the tendon receptacle,
wherein the method comprises the step of insertion of a tolerance shim into the shim chamber with the receive direction of the tolerance shim in the same direction as the receive direction of the tendon receptacle, the step of lowering the end of the tendon into the tendon receptacle, wherein the tensioning head is received in the shim chamber and the elongated tube is received in the tolerance shim slot and in the tendon passage,
the step of pre-tensioning the elongated tube in its elongated direction with respect to the tendon receptacle, wherein a gap is formed or enlarged between the tensioning head and the tension surface, and
the step of insertion of a tensioning shim into the gap, wherein the elongated tube is received in the tensioning shim slot and the tolerance shim and the tensioning shim together fully surround the elongated tube behind the tensioning head.

The tolerance shim as installed in the first step can be used to minimize any play between the tensioning head and the tendon receptacle on both ends of the tendon when it has not been pre-tensioned yet. As from this situation, the pre-tensioning can be performed at the further step with high accuracy. The tolerance shim allows a fabrication of the components of the floating marine platform under reasonable tolerances that are typically applied in shipyards or offshore fabrication yards while a pre-tension in the tendons is obtained as prescribed. As discussed before, the cooperating tensioning shim and tolerance shim keep the tendon end confined in the tendon receptacle.

In an embodiment the method furthermore comprises the step of mounting the tensioning shim and the tolerance shim to the receptacle frame.

In an embodiment the receive direction into the tensioning shim is opposite to and aligned with the receive direction into the tolerance shim.

In an embodiment a tolerance shim is inserted in the tendon receptacles at both ends of the tendon, wherein the tolerance shims on both ends have a cumulative thickness in the elongated direction of the elongated tube that corresponds with a play between the tensioning heads and their nearest tension surfaces in the elongated direction of the tendon tube.

In an embodiment the method is performed by means of an assembly tool, wherein the tendon receptacle comprises a tool dock on the receptacle frame, and wherein the assembly tool comprises a tool frame, a tool connector on the tool frame for engagement of the tool dock, a tendon tensioner and a tensioning shim installer, wherein the tendon tensioner comprises a tendon puller for engaging the tendon, that is moveable with respect to the tool frame in the elongated direction of the elongated tube over a pre-tensioning stroke, and wherein the tensioning shim installer comprises a tensioning shim holder for the tensioning shim, wherein the tensioning shim holder is moveable with respect to the tool frame transverse to the elongated direction of the elongated tube over an installation stroke, wherein the method comprises the steps of engaging the tool dock with the tool connector, by means of the tendon tensioner pre-tensioning the elongated tube with respect to the tendon receptacle, and by means of the tensioning shim installer installing a tensioning shim between the tensioning head and the tensioning surface.

The various aspects and features described and shown in the specification can be applied, individually, wherever possible. These individual aspects, in particular the aspects and features described in the attached dependent claims, can be made subject of divisional patent applications.

### BRIEF DESCRIPTION OF THE DRAWINGS

The invention will be elucidated on the basis of an exemplary embodiment shown in the attached drawings, in which:
Figure 1 is an isometric view of a floating marine platform that supports a wind turbine;
Figure 2 is an isometric view of only the relevant parts of the floating marine platform of figure 1;
Figures 3A-3C are an isometric view, a top view and an exploded view of one of the peripheral columns of the floating marine platform of figure 2;
Figures 4A and 4B are an isometric view and a top view of an assembly tool according to the invention for the assembly of the floating marine platform at the peripheral column of figures 3A-3C; and
Figures 5-7 are isometric views of the subsequent steps of the assembly by means of the assembly tool of figures 4A and 4B.

### DETAILED DESCRIPTION OF THE INVENTION

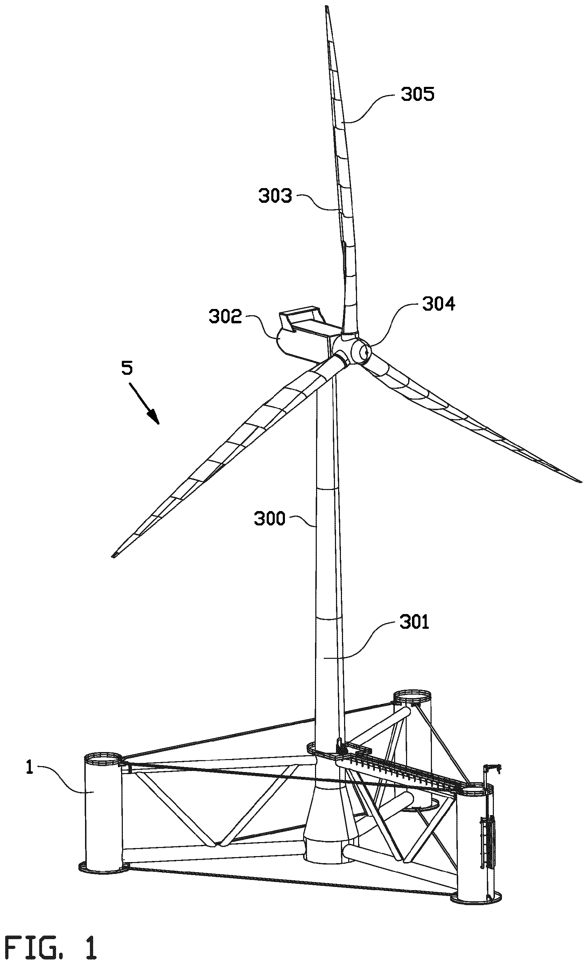

Figure 1 shows a floating marine platform 1 that supports in this example a wind turbine 300 to form a floating wind turbine 5. The wind turbine 300 has a vertical tower 301, a nacelle 302 and a rotor 303. The rotor 303 has a hub 304 that is connected to a generator inside the nacelle 302. The wind turbine 300 and in this example three blades 305 radiating from the hub 304. The wind turbine 300 is capable of producing more than 1 MW of electrical power, currently reaching about 10 to 15 MW. The bottom diameter of the tower 301 may be between 5 meter and 10 meter for a +10 MW wind turbine. The three blades 305 may be more than 100 meters long each. An example is the 12 MW Haliade X turbine from General Electrics. Other turbine designs, such as vertical axis wind turbines can also be supported by the floating marine platform 1.

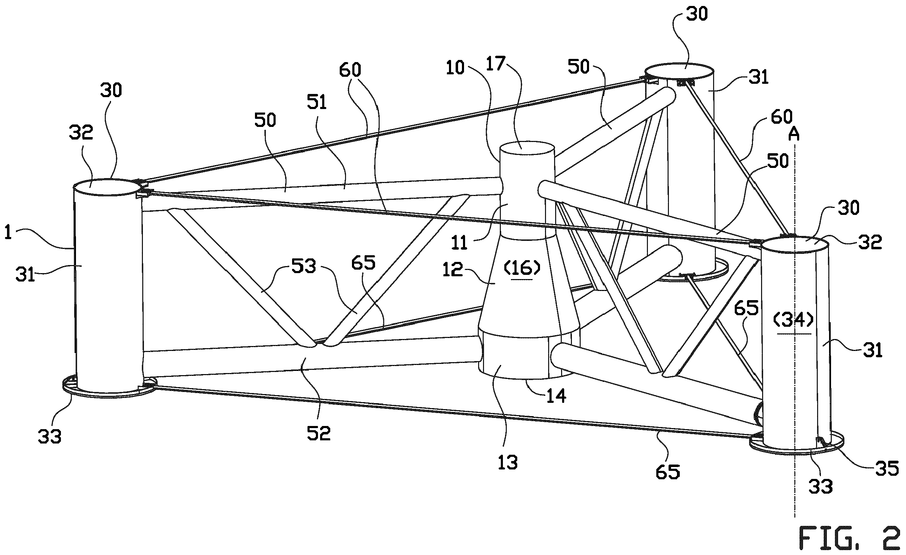

Figure 2 shows the floating marine platform 1 without the wind turbine 300 and without gangways, railings and mounted utilities to illustrate some steps of the manufacturing of the structural parts thereof.

As shown in figure 2, the floating marine platform 1 comprises a central column 10 that is made of steel. The central column 10 has a vertical cylindrical upper circumferential wall section 11 that is closed off with a top wall 17 and that in this embodiment merges downwardly via a flared wall section or conically widening middle circumferential wall section 12 into a vertical cylindrical lower circumferential wall section 13 that is at the bottom closed off with a bottom wall 14 to define an internal chamber 16. The central column 10 has at the upper circumferential wall section 11 a diameter that is approximately equal to the bottom diameter of the tower 301, and that increases in diameter towards the bottom or keel of the central column 10 via the conically widening middle circumferential wall section 12. The central column 10 may be provided with a non-shown footing below the base wall section 13 with a larger diameter that provides additional volume. When the footing is filled with air, it helps to support the weight of the wind turbine 300. When the footing is filled with water, it helps to provide stability to the floating wind turbine 5. Alternatively the central column 10 has a vertical cylindrical wall having a constant diameter over its entire height, wherein the constant diameter is preferably approximately equal to the bottom diameter of the tower 301.

The floating marine platform 1 comprises in this example three vertical cylindrical stabilizing or peripheral columns 30 that are made of steel. The peripheral columns 30 are disposed radially every 120 degrees around the central column 10. The peripheral columns 30 each comprise a vertical cylindrical circumferential wall 31 with a central axis A that is at the upper side closed off with a top wall 32 to form an internal chamber 34. The peripheral columns 30 comprise a watertight flat inside the internal chamber 34 just below the mean water line, and as from the watertight flat the internal chamber 34 is open to the sea. The peripheral columns 30 comprise a skirt 33 around the bottom edge of the circumferential wall 31, and multiple radially extending reinforcement plates 35 between the circumferential wall 31 and the skirt 33. The skirt 33 extends transverse to the central axis A of the circumferential wall 31.

The floating marine platform 1 comprises three outriggers 50 that extend radially between the central column 10 and the peripheral columns 30. The outriggers 50 are made of steel and are composed with an upper tubular member 51 and a lower tubular member 52 that extend in this example parallel to each other and that are interconnected with diagonal braces 53. Alternatively at least one of the upper tubular member 51 and the lower tubular member 52 may be diagonal to the other. Alternatively, the upper tubular member 51 and the lower tubular member 52 are solitary parts that are not interconnected with braces. The upper tubular member 51 and the lower tubular member 52 are connected to the central column 10 and to the peripheral columns 50 by means of flange connections, welds or any other stiff connection.

The floating marine platform 1 comprises three pre-tensioned slender upper structural members or tendons 60 having the same length that interconnect the upper ends of the peripheral columns 30, and three pre-tensioned slender lower structural members or tendons 65 having the same length that interconnect the lower ends of the peripheral columns 30 at the skirts 33. The tendons 60, 65 are embodied as steel tubes and their opposite ends are all connected to the peripheral columns 30 in the same manner as will be described in detail hereafter for the lower tendon 65 and peripheral column 30 as shown at the right side in the drawings.

The central column 10 has a bottom diameter of up to 20 meters. The central column 10 and the peripheral columns 30 typically have a total height of 20-30 meters, in this example about 24 meters. The peripheral columns 30 have a diameter between 6-12 meters. The tendons 60, 65 each have a length of 60-90 meters.

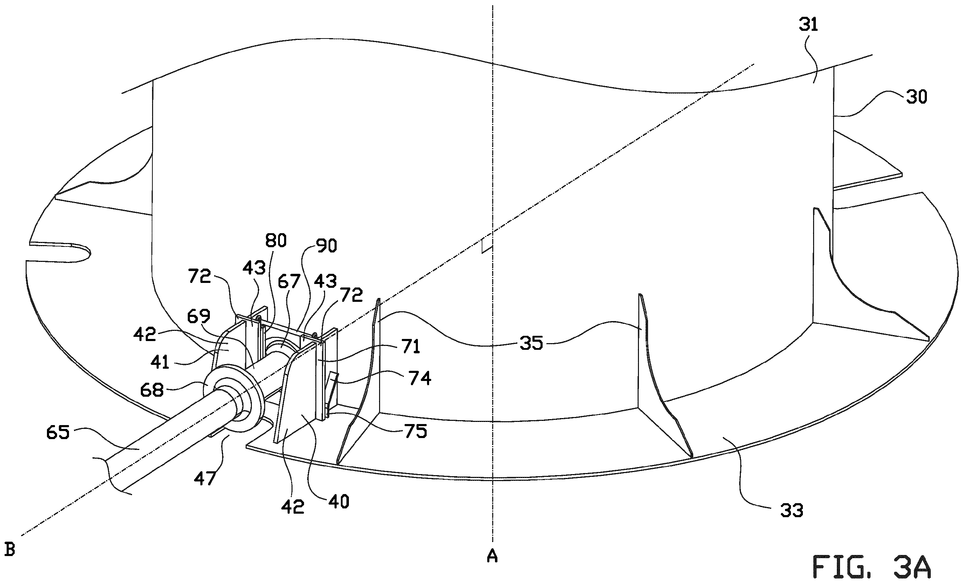

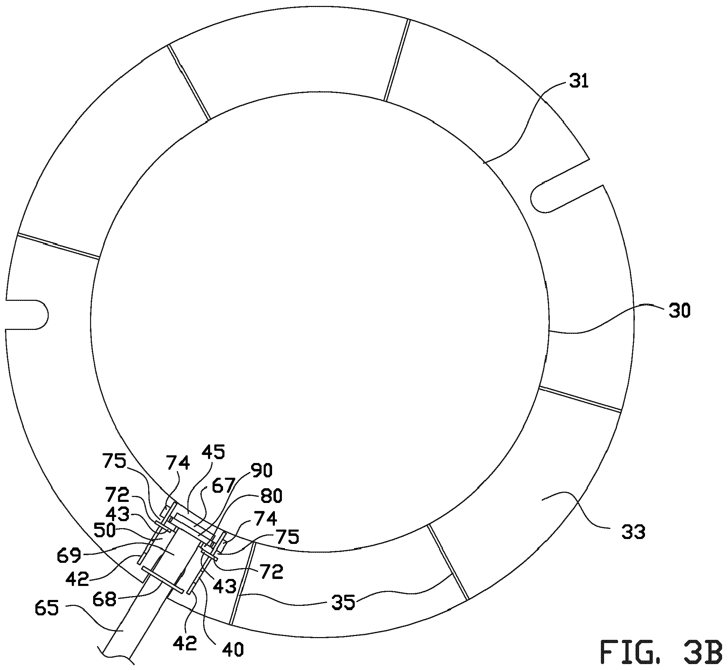

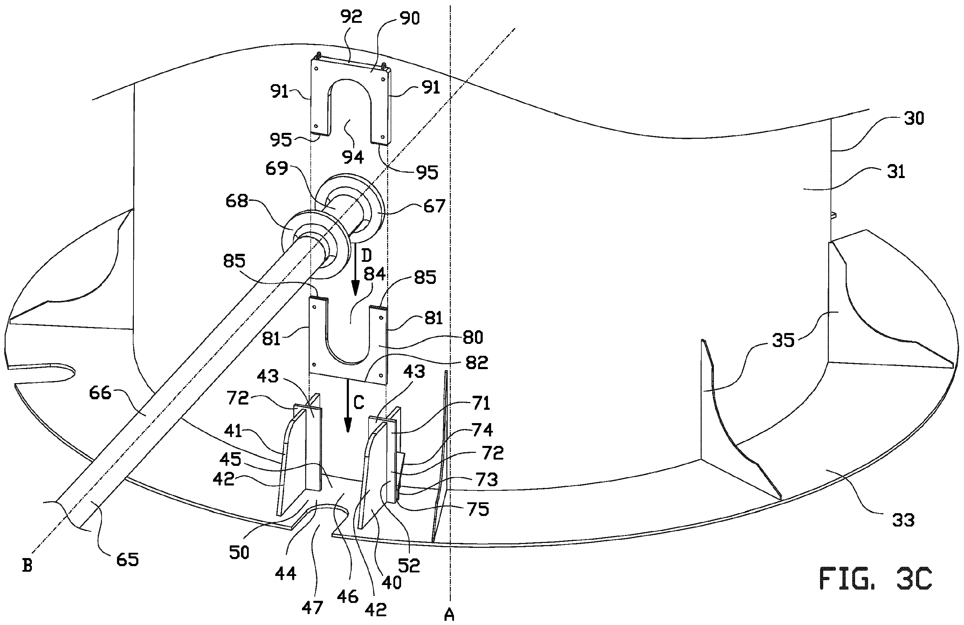

As best shown in figure 3C for one lower tendon 65, each tendon 60, 65 is received in the same manner according to the invention in a tendon receptacle 40 on the peripheral column 30 to which it is connected. The connection is hereafter disclosed for the lower tendon 65, wherein it is emphasized that the upper tendons 65 are connected to the peripheral columns 30 in the same or similar way according to the invention. The tendon receptacle 40 comprises a receptacle frame 41 comprising two parallel side walls 42 that are formed with steel plates that are at one side welded to the circumferential wall 31, and optionally a bottom wall 44 transverse thereto that is formed by a steel plate that is welded to the side walls 42 and to the circumferential wall 31. For the lower tendons 65 the bottom wall 44 is formed by a portion of the present skirt 33. The tendon receptacle 40 comprises two tensioning walls 43 that are formed with steel plates that extend in the same plane and parallel with the central axis A. The tensioning walls 43 are welded to the side walls 42 and the bottom wall 44 and define a tendon passage 46 that extends parallel to the central axis A of the circumferential wall 31 and that is open at its upper side. The tensioning walls 43, the side walls 42, the circumferential wall 31 and optionally the bottom wall 44 together define a shim chamber 45, wherein the tensioning walls 43 form a tensioning surface that faces the shim chamber 45. At the opposite side, the tensioning walls 43, the side walls 42 and optionally the bottom wall 44 bound a tendon tensioner chamber 50, wherein the bottom wall 44 may comprise a bottom opening 47 between and spaced apart from the tensioning walls 43 and the side walls 42. The tendon receptacle 40 is open from above to receive the lower tendon 65 in a downward receive direction parallel to the central axis A of the circumferential wall 31.

The tendon receptacle 40 comprises a tool dock 71 at the outer sides of the side walls 42. The tool dock 71 comprises at each side first dock wall 72 that may be formed by the same plate as its adjacent tensioning wall 43. The tool dock 71 comprises at each side a shorter second dock wall 73 that extends parallel to and spaced apart from the first dock wall 72 to define a tool slot 75 in between that extends parallel to the central axis A of the circumferential wall 31, and a catch wall 74 under an angle to the second dock wall 73 to converge to the tool slot 75. The first dock wall 72, the second dock wall 73 and the catch wall 74 are made of steel plates and are welded to the respective side wall 42.

The lower tendon 65 is made of steel and comprises a elongated tube 66 with a central axis B that is hollow and has a cylindrical cross section. The elongated tube 66 has an outer diameter of 300-600 millimeters and a nominal wall thickness of 15-35 millimeters which increases to 30-60 millimeters locally at the connection. The lower tendon 65 comprises a tensioning head 67 on each end of the elongated tube 66 with a circular cross section that project radially from the elongated tube 66, and a tool engagement head 68 with a circular cross section at the ends of the elongated tube 66 and spaced apart from the tensioning head 67. The tensioning head 67 of the lower tendon 65 is received in the shim chamber 45, the tool engagement head 68 is received in the tendon tensioner chamber 50, and a head shaft section 69 of the elongated tube 66 that extends there between is received in the tendon passage 46.

The floating marine platform 1 comprises a tolerance shim 80 that is confined in the shim chamber 45. The tolerance shim 80 is made of a steel plate and comprises two parallel side edges 81 that extend parallel to the side walls 42 and fit there between to abut the two tensioning walls 43, a bottom edge 82 that abuts the bottom wall 44, a top edge 85 and an elongated slot 84 that is upwardly open centrally in the top edge 85 to receive the head shaft section 69 between the tensioning head 67 and the tool engagement head 68 in a receive direction into the tolerance shim 80.

The floating marine platform 1 comprises a tensioning shim 90 that is confined between the tolerance shim 80 and the tensioning head 67 in the shim chamber 45. The tensioning shim 90 is made of a steel plate and comprises two parallel side edges 91 that extend parallel to the side walls 42 and fit there between, a top edge 92, a bottom edge 93 that abuts the bottom wall 44, and an elongated slot 94 that is downwardly open centrally in the bottom wall 93 to receive the head shaft section 69 in a receive direction into the tensioning shim 90. The tolerance shim 80 and the tensioning shim 90 are both U-shaped and have the same outer dimensions, and abut each other over the entire area along their respective side edges 81, 91. The tolerance shim 80 and the tensioning shim 90 have the elongated slot 84 and the elongated slot 94 directed upwards and downwards in opposite directions that are aligned and parallel to the central axis A of the circumferential wall 31 whereby they together entirely surround the head shaft section 69.

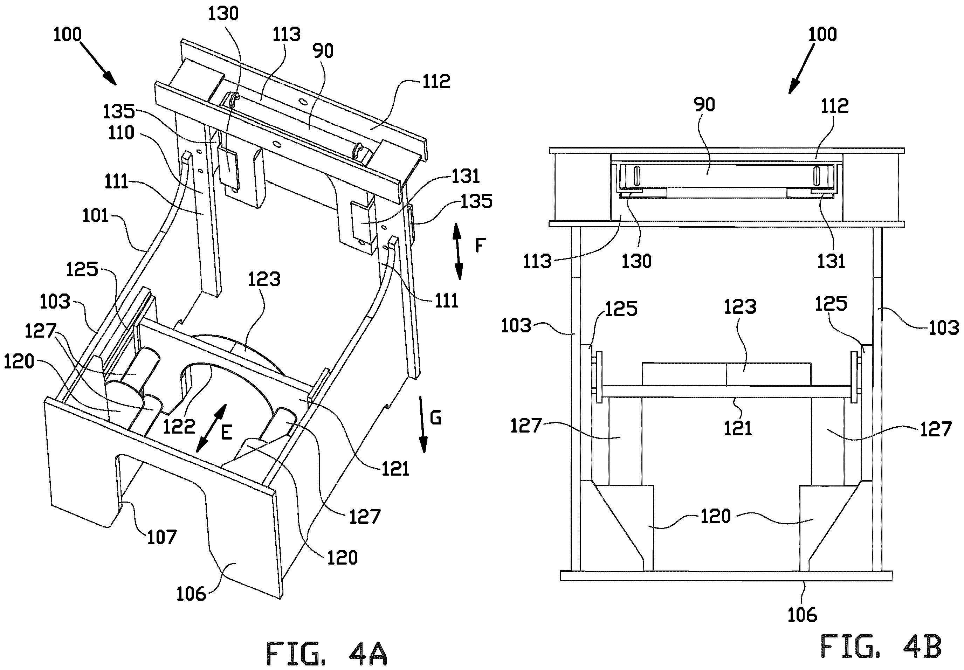

The tensioning shim 90 is installed by means of an assembly tool 100 as best shown in figures 4A and 4B. The assembly tool 100 comprises a tool frame 101 that is formed with two parallel side walls 103, a back wall 106 between the side walls 103 with a central opening 107 that is downwardly open, a tool connector 110 that is formed with two insert walls 111 in the same vertical plane that project inwards as from the side walls 103, and a bridge 112 with a central slot 113 that connects the insert walls 111 to each other at their top sides. The side walls 103, the back wall 106, the insert walls 111 and the bridge 112 are made of steel plates that are welded to each other. The insert walls 111 fit inside the tool slots 75 of the tendon receptacle 40, whereby the assembly tool 100 can be coupled to the tendon receptacle 40 by a vertical translation in direction D parallel to the central axis A of the circumferential wall 31 or transverse to the central axis B of the lower tendon 65.

The assembly tool 100 comprises a tendon tensioner 120 inside the tool frame 101. The tendon tensioner 120 comprises a tendon puller 121 that is formed with a steel plate and that has a central opening 122 that is downwardly open, and a steel abutment body 123 along the central opening 122. The tendon tensioner 120 comprises two first linear guides 125 for guiding a reciprocal sliding movement of the tendon puller 121 in a linear sliding direction E transverse to the central axis A of the circumferential wall 31 or parallel to the central axis B of the lower tendon 65 over a pre-tensioning stroke, which is powered by two pairs of first hydraulic cylinders 127 between the tool frame 101 and the tendon puller 121.

The assembly tool 100 comprises a tensioning shim installer 130 in front of the insert walls 111. The tensioning shim installer 130 comprises a tensioning shim holder 131 for receiving and holding the tensioning shim 90, two second linear guides 135 for guiding a reciprocal sliding movement of the tensioning shim holder 131 in a linear sliding direction F parallel to the central axis A of the circumferential wall 31 or transverse to the central axis B of the lower tendon 65 over an installation stroke, which is powered by a pair of not shown second hydraulic cylinders. The first hydraulic cylinders 127 of the tendon tensioner 120 and the second hydraulic cylinders of the tensioning shim installer 130 are connected to a hydraulic power pack that is remote, or that is remotely controlled. The entire assembly tool 100 can be suspended by means of a hoisting cable. Therefore the assembly tool 100 can be controlled from a safe distance, in particular when the assembly tool 100 is applied under water.

The floating marine platform 1 is modular in structure, wherein the central column 10, the peripheral columns 30, the outriggers 50 and the tendons 60, 65 are fabricated under reasonable tolerances that are typically applied in shipyards or offshore fabrication yards. The tendons 60, 65 are installed after the outriggers 50 have been connected to the central column 10 and the peripheral columns 30, whereby they have to absorb the differences between their nominal and actual required length, which difference may be 500 millimeters or less. Due to the ability to absorb these differences, the allowed fabrication tolerances of the other parts remains reasonable. The tendons 60, 65 may also be re-installed insitu and under water during the service life of the moored floating marine platform 1, for example to extend the service life, or at unlikely event that a tendon 60, 65 is lost or damaged. The lower tendons 65 may be located about 10-15 meters under water.

The method for the assembly of the floating marine platform 1, in particular the installation of the lower tendon 65 thereof by means of the assembly tool 100 is shown in the subsequent figures 3C and 5-7. The installation of the upper tendons 65 is performed in the same or similar way by means of the assembly tool 100 according to the invention. Any small fabrication tolerance in the central column 30, the peripheral columns 30 and the outriggers 50 have impact on the fitting of the tendons 60, 65 that are installed as the last step in the entire manufacturing process of the floating marine platform 1.

As shown in figure 3C, the longitudinal play or "as-build" distance between the tensioning walls 43 and the tensioning head 67 is determined and at least at the one shown end of the lower tendon 65 a tolerance shim 80 is installed in the shim chamber 45 in direction C parallel to the central axis A of the circumferential wall 31 and fixated against the two tensioning walls 43. The tolerance shim 80 at the one shown end of the lower tendon 65 has a thickness, or the tolerance shims 80 on both ends have a cumulative thickness that corresponds with the determined longitudinal play under a narrow tolerance. Subsequently the lower tendon 65 is hoisted by means of a spreader bar, brought between the peripheral columns 30 and lowered in vertical direction D parallel to the central axis A of the circumferential wall 31 while the central axis B of the lower tendon 65 is kept perpendicular thereto, whereby the head shaft section 69 is received in the elongated slot 84 of the tolerance shim 80 and the tensioning head 67 comes in abutment with the tolerance shim 80.

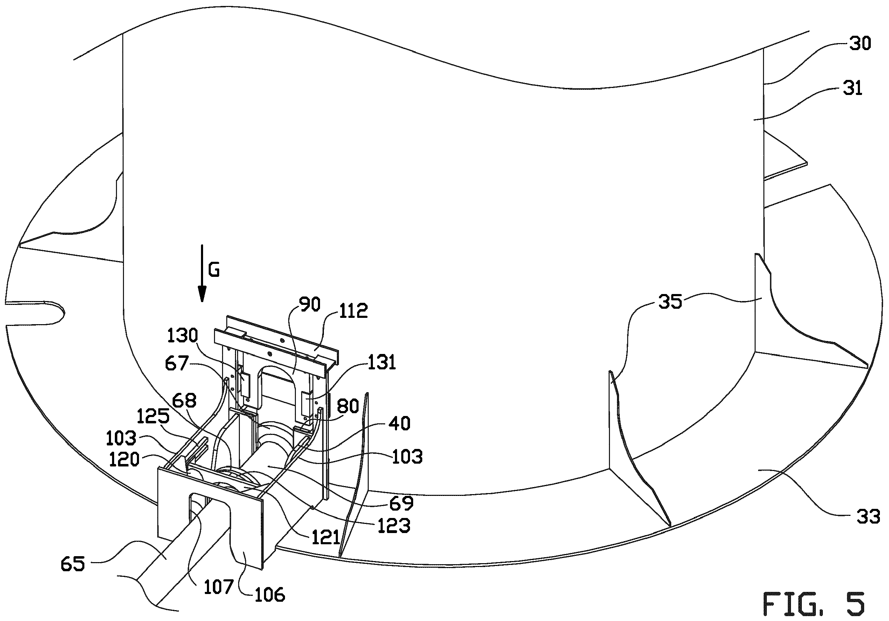

As shown in figure 5, the assembly tool 100 is brought in a first position, in which the first hydraulic cylinders 127 of the tendon tensioner 120 are retracted and thereby the tendon puller 121 is brought in direction E in a receiving position, and the second hydraulic cylinders of the tensioning shim installer 130 are extended and thereby the tensioning shim holder 131 is brought in an upper standby position in which a tensioning shim 90 is positioned in the tensioning shim holder 131. In this first position the entire assembly tool 100 is hoisted and lowered in direction D parallel to the central axis A of the circumferential wall 31 onto the tendon receptacle 40, wherein the insert walls 110 of the tool connector 110 enter the tool slots 75 of the tool dock 75 and finally land on the bottom wall 44 as shown in figure 5.

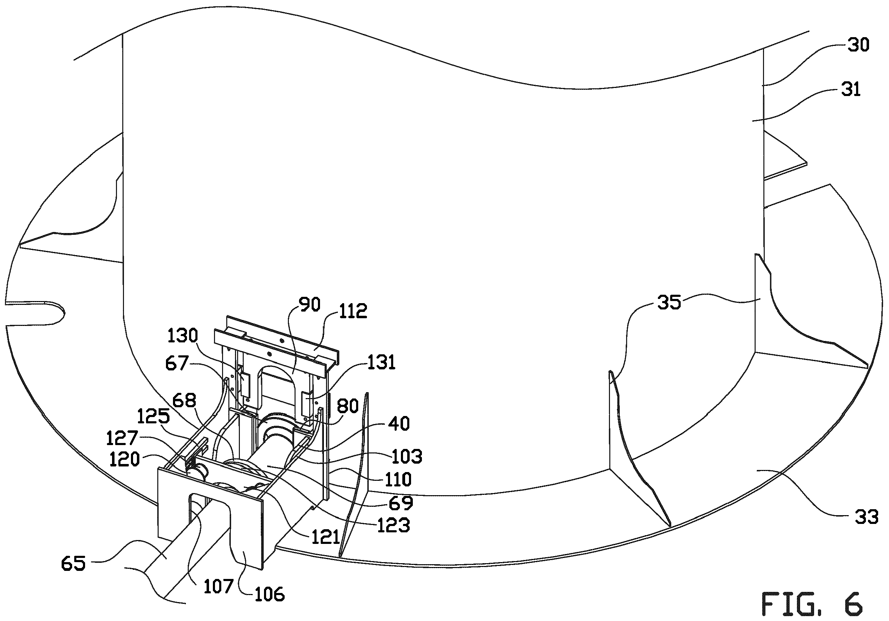

Subsequently, as shown in figure 6, the assembly tool 100 is brought in a second position, in which the first hydraulic cylinders 127 of the tendon tensioner 120 are hydraulically extended over the pre-tensioning stroke and thereby the tendon puller 121 is brought in direction E in engagement with the tool engagement head 68 and subsequently in a final pre-tensioning position. Over this pre-tensioning stroke the lower tendon 65 is pretensioned along its central axis B and a gap is formed between the tensioning head 67 and the tolerance shim 80. The tendon tensioner 120 performs inline tensioning of the lower tendon 65, as the displacement of the tool engagement head 68 induces the same displacement of the tensioning head 67 in the direction of the central axis B of the lower tendon 65, and the tensioning force is transferred in this direction onto the tool dock 71.

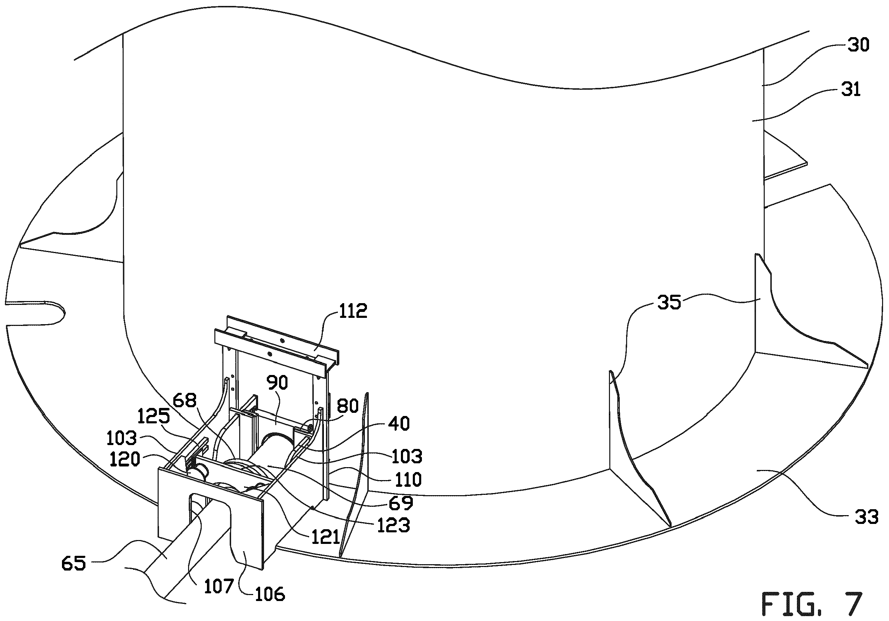

Subsequently, as shown in figure 7, the assembly tool 130 is brought in a third position, in which the second hydraulic cylinders of the tensioning shim installer 130 are hydraulically retracted and thereby the tensioning shim holder 131 is lowered and the tensioning shim 90 fills the gap between the tensioning head 67 and the tolerance shim 80.

Finally the assembly tool 100 is brought in a fourth position in which the first hydraulic cylinders 127 of the tendon tensioner 120 are hydraulically retracted to bring the tensioning head 67 in final engagement with the inserted tensioning shim holder 131. The tolerance shim 80 and the tensioning shim 90 are connected to the tensioning walls 43 so as to lock the lower tendon 65 in the tendon receptacle 40. After performing the assembly method the lower tendon 65 and finally all tendons 60, 65 are pre-tensioned by inducing a pre-tension stroke thereto that is between 0,04% and 0,07% of the length of tendon 60, 65, preferably 0,05% of the length of the tendon 60, 65. In this way the permanent deformation of the tendons 60, 65 will remain very small, as they operate in the elastic range. The tendon 60, 65 will therefore remain in tension during the lifetime of the floating marine platform 1. Due to the pre-tension the tendons 60, 65 remain in tension at all times, except during the largest waves of the most powerful storms, whereby they may occasionally get slack for brief periods, such as a few seconds of the wave cycle at most.

In an embodiment the outriggers 50, in particular the tubular members 51, 52 thereof are biased in their elongated direction towards the central column 10, preferably the tubular members 51, 52 that extend in a common horizontal plane have the same bias, providing stiffness to the tubular members 51, 52 in the horizontal plane and so reducing the moment forces in the tubular members 51, 52. The bias in the upper tubular members 51 and the lower tubular members 52 may differ from each other in order to further improve the stiffness of the outriggers 50.

The method for the installation of the tendons 60, 65 ensures that at least at one end of each tendon 60, 65, there is in the tendon receptacle 40 a set of one tolerance shim 80 and one oppositely directed tensioning shim 90 present between the tensioning head 67 and the tensioning walls 43 that together fully surround the elongated tube 66 inside their opposite and facing elongated slots 84, 94 to bridge the distance between the tensioning walls 43 and the tensioning head 67.

The installation of the tendons 60, 65 can be performed safely on an integration site a marshalling harbor for a new built floating marine platform 1, as well as during the service life of the moored floating marine platform 1, for example in case of a collision with a vessel or any other unexpected failure of a tendon 60, 65. In the latter case the tendon 60, 65 can be replaced without divers and under mild sea states with a wave height of less than 2 meters and small currents by lowering the remotely controlled assembly tool 100 with a tensioning shim 90 in its tensioning shim holder 131.

It is to be understood that the above description is included to illustrate the operation of the preferred embodiments and is not meant to limit the scope of the invention. From the above discussion, many variations will be apparent to one skilled in the art that would yet be encompassed by the scope of the present invention.

## Claims

1. Set comprising a floating marine platform and an assembly tool for the assembly of the floating marine platform,
wherein the floating marine platform comprises a central column, multiple peripheral columns circumferentially around the central column, radially extending outriggers that connect the peripheral columns with the central column, and tendons spanning between each adjacent pair of peripheral columns, wherein the peripheral columns comprise a circumferential wall and a tendon receptacle on the circumferential wall for receiving a tendon end, and wherein the tendon comprises an elongated tube and a tensioning head at an end of the elongated tube,
wherein the tendon receptacle comprises a receptacle frame and a tool dock on the receptacle frame, wherein the receptacle frame bounds a shim chamber and a tendon passage and comprises a tensioning surface that faces the shim chamber,
wherein the tensioning head is enclosed in the shim chamber and the elongated tube extends through the tendon passage,
wherein the floating marine platform comprises a tensioning shim in the shim chamber between the tensioning head and the tensioning surface,
wherein the assembly tool comprises a tool frame, a tool connector on the tool frame for engagement of the tool dock, a tendon tensioner and a tensioning shim installer, wherein the tendon tensioner comprises a tendon puller for engaging the tendon, that is moveable with respect to the tool frame in the elongated direction of the elongated tube over a pre-tensioning stroke, and wherein the tensioning shim installer comprises a tensioning shim holder for the tensioning shim, wherein the tensioning shim holder is moveable with respect to the tool frame transverse to the elongated direction of the elongated tube over an installation stroke.

2. Set according to claim 1, wherein the tendon comprises a tool engagement head on the elongated tube spaced apart from the tensioning head, and wherein the tendon puller comprises an abutment body for abutment of the tool engagement head.

3. Set according to any one of the preceding claims, wherein the tool dock and the tool frame comprise a tool slot and an insert wall for insertion into the tool slot in an insert direction transverse to the elongated direction of the elongated tube.

4. Set according to any one of the preceding claims, wherein the tendon tensioner comprises a first actuator between the tendon puller and the tool frame for moving the tendon puller over the pre-tensioning stroke, wherein the set preferably comprises a remote controller for the first actuator.

5. Set according to any one of the preceding claims, wherein the tensioning shim installer comprises a second actuator between the tensioning shim holder and the tool frame for moving the tensioning shim holder over the installation stroke, wherein the set preferably comprises a remote controller for the second actuator.

6. Set according to any one of the preceding claims, wherein the receptacle frame comprises two opposite tensioning walls spaced apart from each other that bound the tendon passage and that form the tensioning surface.

7. Set according to any one of the preceding claims, wherein the shim chamber and the tendon passage are open at one side to receive the tendon in a receive direction of the tendon receptacle, wherein preferably the receive direction of the tendon receptacle is directed downwards to receive the end of the tendon from above.

8. Set according to any one of the preceding claims, wherein the tensioning shim comprises a tensioning shim plate with an elongated tensioning shim slot that opens at an edge of the tensioning shim plate to define a receive direction into the tensioning shim, wherein the elongated tube extends through the tensioning shim slot, wherein preferably the tensioning shim slot extends through the centre of the tensioning shim plate.

9. Set according to any one of the preceding claims, wherein the floating marine platform comprises a tolerance shim in the shim chamber between the tensioning head and the tensioning surface and in series with the tensioning shim in the elongated direction of the elongated tube, wherein preferably the tolerance shim comprises a tolerance shim plate with an elongated tolerance shim slot that opens at an edge of the tolerance shim plate to define a receive direction into the tolerance shim, wherein the elongated tube extends through the tolerance shim slot, wherein preferably the tolerance shim slot extends through the centre of the tolerance shim plate.

10. Set according to any one of the preceding claims, wherein the tensioning shim comprises a tensioning shim plate with an elongated tensioning shim slot that opens at an edge of the tensioning shim plate to define a receive direction into the tensioning shim, wherein the elongated tube extends through the tensioning shim slot, and wherein the floating marine platform comprises a tolerance shim in the shim chamber between the tensioning head and the tensioning surface and in series with the tensioning shim in the elongated direction of the elongated tube, wherein the tolerance shim comprises a tolerance shim plate with an elongated tolerance shim slot that opens at an edge of the tolerance shim plate to define a receive direction into the tolerance shim, wherein the elongated tube extends through the tolerance shim slot, and the tensioning shim and the tolerance shim together fully surround the elongated tube behind the tensioning head, wherein preferably the receive direction into the tensioning shim is opposite to and aligned with the receive direction into the tolerance shim.

11. Set according to claim 10, wherein the tensioning shim and the tolerance shim are mounted to the receptacle frame.

12. Method for the assembly of a floating marine platform,
wherein the floating marine platform comprises a central column, multiple peripheral columns circumferentially around the central column, radially extending outriggers that connect the peripheral columns with the central column, and tendons spanning between each adjacent pair of peripheral columns, wherein the peripheral columns comprise a circumferential wall and a tendon receptacle on the circumferential wall for receiving a tendon end, and wherein the tendon comprises an elongated tube and a tensioning head at an end of the elongated tube,
wherein the tendon receptacle comprises a receptacle frame that bounds a shim chamber and a tendon passage and comprises a tensioning surface that faces the shim chamber,
wherein the tensioning head is enclosed in the shim chamber and the elongated tube extends through the tendon passage,
wherein the floating marine platform comprises a tensioning shim and a tolerance shim in the shim chamber in series between the tensioning head and the tensioning surface,
wherein the tensioning shim comprises a tensioning shim plate with an elongated tensioning shim slot that opens at an edge of the tensioning shim plate to define a receive direction into the tensioning shim, and wherein the tolerance shim comprises a tolerance shim plate with an elongated tolerance shim slot that opens at one edge of the tolerance shim plate to define a receive direction into the tolerance shim,
wherein the elongated tube extends through the tendon passage, the tolerance shim slot and the tensioning slot, and wherein the shim chamber and the tendon passage are open at one side to receive the tendon in a receive direction of the tendon receptacle,
wherein the method comprises the step of insertion of a tolerance shim into the shim chamber with the receive direction of the tolerance shim in the same direction as the receive direction of the tendon receptacle, the step of lowering the end of the tendon into the tendon receptacle, wherein the tensioning head is received in the shim chamber and the elongated tube is received in the tolerance shim slot and in the tendon passage,
the step of pre-tensioning the elongated tube in its elongated direction with respect to the tendon receptacle, wherein a gap is formed or enlarged between the tensioning head and the tension surface, and
the step of insertion of a tensioning shim into the gap, wherein the elongated tube is received in the tensioning shim slot and the tolerance shim and the tensioning shim together fully surround the elongated tube behind the tensioning head.

13. Method according to claim 12, furthermore comprising the step of mounting the tensioning shim and the tolerance shim to the receptacle frame.

14. Method according to claim 12 or 13, wherein the receive direction into the tensioning shim is opposite to and aligned with the receive direction into the tolerance shim.

15. Method according to any one of the claims 12-14, wherein a tolerance shim is inserted in the tendon receptacles at both ends of the tendon, wherein the tolerance shims on both ends have a cumulative thickness in the elongated direction of the elongated tube that corresponds with a play between the tensioning heads and their nearest tension surfaces in the elongated direction of the tendon tube.

16. Method according to any one of the claims 12-15, that is performed by means of an assembly tool, wherein the tendon receptacle comprises a tool dock on the receptacle frame, and wherein the assembly tool comprises a tool frame, a tool connector on the tool frame for engagement of the tool dock, a tendon tensioner and a tensioning shim installer, wherein the tendon tensioner comprises a tendon puller for engaging the tendon, that is moveable with respect to the tool frame in the elongated direction of the elongated tube over a pre-tensioning stroke, and wherein the tensioning shim installer comprises a tensioning shim holder for the tensioning shim, wherein the tensioning shim holder is moveable with respect to the tool frame transverse to the elongated direction of the elongated tube over an installation stroke, wherein the method comprises the steps of engaging the tool dock with the tool connector, by means of the tendon tensioner pre-tensioning the elongated tube with respect to the tendon receptacle, and by means of the tensioning shim installer installing a tensioning shim between the tensioning head and the tensioning surface.
